# EUROPEAN PATENT SPECIFICATION

(11) **EP 2 346 591 B1**
(45) Date of publication and mention of the grant of the patent: **15.07.2015**
(21) Application number: 09745070.4
(22) Date of filing: 05.11.2009
(51) Int. Cl.: B01D 53/14, B01D 53/52, B01D 53/58, B01D 53/75, B01D 53/84, B01D 53/86, C02F 1/20, C10K 1/00, C10K 1/06, C10K 1/10, C10K 1/12

(54) **METHOD FOR TREATING AN OFF-GAS STREAM IN A GASIFICATION PROCESS**
VERFAHREN ZUR BEHANDLUNG EINES ABGASSTROMS IN EINEM VERGASUNGSVERFAHREN
PROCÉDÉ ET APPAREIL POUR LE TRAITEMENT D'UN EFFLUENT GAZEUX D'UN PROCÉDÉ DE GAZÉIFICATION

(30) Priority: 07.11.2008 EP 08168651
(43) Date of publication of application: 27.07.2011
(73) Proprietor: Shell Internationale Research Maatschappij B.V., 2596 HR Den Haag (NL)
(72) Inventor: SCHREUDER, Sandra, NL-1031 HW Amsterdam (NL)
(74) Representative: Matthezing, Robert Maarten
(86) International application number: PCT/EP2009/064718
(87) International publication number: WO 2010/052286

(56) References cited:
- EP-A- 0 272 748
- WO-A-2004/105922
- GB-A- 1 384 562
- US-B1- 7 258 848

## Description

The present invention relates to a method of treating an off-gas stream, and particularly an off-gas stream from the sour slurry stripper of a gasification plant, to provide an ammonium-rich stream.

Gasification plants are well known in the art. In such plants, a hydrocarbon feed together with steam, nitrogen and oxygen can be passed to a gasifier. The hydrocarbon feed, such as coal, is partially oxidised to provide hot synthesis (also termed syngas) and ash, which can be in the form of slag.

Synthesis gas or syngas are used synonymously herein as general terms which are applied to mixtures of carbon monoxide, hydrogen, inert components and carbon dioxide that are derived from the gasification of coal, oil residues, waste or biomass. The main components of syngas are hydrogen and carbon monoxide. Further, often carbon dioxide and traces of methane are present. Syngas, once suitably treated to remove unwanted components, is a valuable feedstock useful in the Fischer-Tropsch process for the manufacture of liquid hydrocarbons.

The ash generated in the gasification reaction can gravitate through the gasifier into a quench tank, from which it can be conveyed to a receiving bin for disposal.

The temperature of the hot syngas can be reduced by quenching, for instance with recycled syngas, in a quench section of the gasifier. The quenched syngas can then be sent to a waste heat boiler for further cooling to provide a cooled syngas stream. The waste heat boiler, which is also referred to as a syngas cooler, can be used to generate high pressure steam.

The cooled syngas stream can then be passed to a dry solids removal unit to remove a portion of the solids as fly ash thus providing a wet solids syngas stream. The wet solids can then be separated from the syngas in the wet solids syngas stream in a wet scrubbing column, such as a venture-type scrubber, to provide a slurry bleed stream and a raw syngas stream. The slurry bleed stream is normally passed to a primary water treatment unit.

The raw syngas stream can be passed to a high pressure hydrolysis unit to hydrolyse any HCN, COS and CS₂ present to provide a hydrolysed syngas stream. The hydrolysed syngas stream can then be sent to an acid gas removal unit to separate any H₂S and CO₂ to provide a treated syngas stream.

The slurry bleed stream from the wet scrubbing column used to remove the wet solids from the wet solids syngas stream can be passed to a sour slurry stripper, where it can be treated with steam to separate the gaseous components such as hydrogen sulphide (H₂S), carbon dioxide (CO₂), ammonia (NH₃) and hydrogen cyanide (HCN) as an off-gas stream. In GB-A-1384562 the off-gas stream comprising H2S and HCN is being contacted with oxygen or an oxygen containing gas under suitable conditions, combustion gases and clean water being formed. The off-gas stream can also be passed to a Claus burner to incinerate the contaminants to provide N₂, CO₂, sulphur and H₂O. The ammonia present in the first off-gas stream, which is conventionally incinerated to N₂ and H₂O in the Claus burner is a valuable commercial product, particularly useful in the manufacture of ammonium-based fertilizers.

The present invention provides a method of treating the off-gas stream from the sour slurry stripper to provide an ammonium-rich stream, thus advantageously avoiding the incineration of this valuable component and allowing its subsequent use, for instance as a fertilizer product.

Thus, in a first aspect, the present invention provides a method of treating a first off-gas stream in a gasification process to provide an ammonium-rich stream, comprising at least the steps of:
(a) providing a first off-gas stream comprising HCN, NH₃, H₂S, CO₂ and optionally one or both of COS and CS₂ by separating a slurry bleed stream comprising particulate solids, HCN, NH₃, H₂S, CO₂ and optionally one or both of COS and CS₂ in a sour slurry stripper to provide the first off-gas stream and a stripped slurry stream comprising particulate solids;
(b) passing the first off-gas stream (60) to a hydrolysis zone (100) operating at a pressure in the range of 1.5 to 10 bara to hydrolyse the HCN and any COS and CS₂ to provide a second off-gas stream (110) comprising NH₃, H₂S and CO₂; and
(c) scrubbing the second off-gas stream with an aqueous acidic stream in an ammonia scrubber to provide a third off-gas stream comprising H₂S and CO₂ and an ammonium-rich aqueous stream (107)
(d) contacting the third off-gas stream (160) with an aqueous alkaline stream (410) in a H₂S-removal zone (250) to provide a fourth off-gas stream (270) comprising CO₂ and a hydrogen sulphide-comprising aqueous stream(260); and
(e) passing the hydrogen sulphide-comprising aqueous stream (260), optionally via a flash vessel (350), to a bio-reactor (400) comprising sulphide-oxidising bacteria in the presence of oxygen to generate a sulphur slurry and regenerated aqueous alkaline,
wherein in step (e) the sulphur slurry comprises sulphate, and the process further comprising the steps of:
(h) generating a sulphuric acid stream from the sulphate in the sulphur slurry; and
(i) passing the sulphuric acid stream to the ammonia scrubber (150) as the aqueous acidic stream (180).

The present invention thus provides a method for the removal of HCN and NH₃ and optionally one or both of COS and CS₂ (if present) from a first gas off-gas stream comprising HCN, NH₃, H₂S, CO₂ and optionally one or both of COS and CS₂ to provide a third off-gas stream comprising H₂S and CO₂.

The third off-gas stream is passed to a sulphur recovery unit. The removal of contaminants such as HCN and NH₃ and optionally one or both of COS and CS₂ (if present) in the method of the present invention is advantageous because this treatment allows the resulting third off-gas stream comprising H₂S and CO₂ to be further processed to remove the H₂S component by bio-desulphurisation.

The bio-desulphurisation treatment can utilise microbes to oxidise the H₂S component to provide elemental sulphur (S₈) and sulphate (SO₄²⁻). The sulphate produced can be used to generate sulphuric acid which can advantageously be used integrated into the method of the invention as the aqueous acidic stream in the ammonia scrubber.

Incinerating an off-gas stream comprising HCN and NH₃, for example in a furnace, would result in the formation of NOx and SOx. For reasons of toxicity and environmental protection, formation of these compounds should be avoided. An untreated off-gas stream comprising HCN and NH₃ could not be further processed as such by bio-desulphurisation because the HCN and NH₃ contaminants are poisons for the microbes used in the oxidation of the sulphur compounds. Thus, treating the first off-gas stream according to the method of the present invention allows a biological process to be used to remove hydrogen sulphide from the off-gas.

An apparatus for treating a first off-gas stream in a gasification plant to provide an ammonium-rich stream, comprises at least:
a sour slurry stripper to separate particulate material from a slurry bleed stream, said sour slurry stripper having a first inlet for the slurry bleed stream comprising particulate solids, HCN, NH₃, H₂S, CO₂ and optionally one or both of COS and CS₂, a first outlet for a first off-gas stream comprising HCN, NH₃, H₂S, CO₂ and optionally one or both of COS and CS₂ and a second outlet for a stripped slurry stream comprising particulate solids;
a hydrolysis zone (100) to hydrolyse HCN and any COS and CS₂ in the first off-gas stream (60) operating at a pressure in the range of 1.5 to 10 bara, said hydrolysis unit (100) having a first inlet (98) for the first off-gas stream (60) connected to the first outlet (51) of the sour slurry stripper (50) and a first outlet (101) for a second off-gas stream (110) comprising NH₃, H₂S and CO₂; and
an ammonia scrubber to separate NH₃ from the second off-gas stream, said ammonia scrubber having a first inlet for the second off-gas stream connected to the first outlet of the low pressure hydrolysis unit and a first outlet for a third off-gas stream comprising H₂S and CO₂, a second inlet for an aqueous acidic stream and a second outlet for an ammonium-rich aqueous stream.

In step (a) of the process according to the invention, a slurry bleed stream, which can be provided by the wet scrubbing column of the gasification plant, is separated in a sour slurry stripper.

The slurry bleed stream comprises particulate solids, HCN, NH₃, H₂S, CO₂ and optionally one or both of COS and CS₂. The sour slurry stripper separates the particulate component of the slurry bleed stream from the liquid and gaseous components to provide the first off-gas stream comprising HCN, NH₃, H₂S, CO₂ and optionally one or both of COS and CS₂, and a stripped slurry stream comprising particulate solids. It is preferred that the separation is carried out in the presence of steam.

The composition of the first off-gas stream may vary. As an example, a typical composition, as volume % for the first off-gas stream is: HCN: 1-5 %, NH₃: 1-8%, H₂S: 7%, CO₂: 39%, COS: trace (ppm), CS₂: trace (ppm) H₂O: 40%, N₂:1% with the balance being CO and H₂. Preferably, the amount of HCN in the first off-gas stream is 2-4 volume%. Preferably, the first off-gas stream has a pressure in the range of 1.1 to 4 bara, more preferably about 2 bara, still more preferably about 1.8 bara.

In step (b) of the process according to the invention, HCN and optionally one or both of any COS and CS₂ present are removed from the first off-gas stream obtained in step (a) by hydrolysis. The first off-gas stream is passed to a low pressure hydrolysis zone to obtain a second off-gas stream. The hydrolysis zone generally comprises a hydrolysis catalyst.

The pressure in the low pressure hydrolysis zone is in the range of 1.5 to 10 bara , preferably in the range of 2.5 to 5 bara.

In the hydrolysis zone, HCN and, if applicable, one or both of COS and CS2 are converted according to the following reactions:
(A) Hydrolysis of HCN: HCN + H₂O → NH₃ + CO
(B) Hydrolysis of COS: COS + H₂O → H₂S + CO₂
(C) Hydrolysis of CS₂: CS₂ + 2H₂O → 2H₂S + CO₂

The amount of water/steam in the hydrolysis zone is preferably between 10 v/v% and 80 v/v%, more preferably between 20 v/v% and 70 v/v%, still more preferably between 30 v/v% and 50 v/v%, based on steam. At the preferred water/steam amounts, the conversion of HCN and optionally one or both of COS and CS₂ is improved. Typically, the amount of H₂O in the first off-gas stream is sufficient to achieve conversion of HCN and optionally one or both of COS and CS₂ if present.

Optionally, water or steam or a mixture thereof may be added to the first off-gas stream prior to passing it to the hydrolysis zone, in order to achieve the desired water/steam amount. Optionally, the reaction conditions are selected in such a way, that the reaction mixture remains below the dew point of H₂O. The H₂O in the gas stream can then advantageously be used for the conversion of HCN and optionally COS and/or CS₂ to the desired levels.

The hydrolysis zone can be a gas/solid contactor, preferably a fixed bed reactor. Catalysts for the hydrolysis of HCN and optionally one or both of COS and CS₂ are known to those skilled in the art and include for example TiO₂-based catalysts or catalysts based on alumina and/or chromium-oxide. Preferred catalysts are TiO₂-based catalysts.

The hydrolysis results in a second off-gas stream comprising NH₃, H₂S and CO₂ which is HCN- and if applicable COS- and CS₂- lean, for instance having a concentration of HCN below 0.01 vol%, suitably between 0.1 ppmv and 0.01 vol%, preferably between 1 ppmv and 50 ppmv, based on the total gas stream.

The concentration of COS, if present, in the second off-gas stream is below 0.01 vol%, suitably between 10 ppmv and 0.01 vol%, preferably between 15 ppmv and 100 ppmv, based on the total gas stream.

The concentration of CS₂, if present, in the second off-gas stream is below 0.01 vol%, suitably between 1 ppmv and 0.01 vol%, preferably between 2 ppmv and 50 ppmv, based on the total gas stream.

In step (c) of the process according to the invention, NH₃ is removed from the second off-gas stream by scrubbing the second off-gas stream in an ammonia scrubber with an aqueous acidic stream to obtain an ammonium-rich aqueous stream and a third off-gas stream. The process is especially suitable for a second off-gas stream having an amount of NH₃ of between 1 and 8 vol%, preferably between 3 and 6 vol%. The temperature in the NH₃-removal zone is suitably between 5 and 70 °C, preferably between 10 and 50 °C, to achieve a sufficient removal of NH₃ at a low temperature. The pressure in the ammonia scrubber is suitably between 1 and 10 bara, preferably between 2 and 4 bara, to achieve a sufficient removal of NH₃ at a low temperature.

In a preferred embodiment, the second off-gas stream comprising NH₃ is combined with the sour water stripper off-gas stream before entering the ammonia scrubber. This might result in an ammonium rich aqueous stream with a higher concentration of ammonia. Furthermore, the process might be more efficient since only one ammonia scrubber is needed to process both ammonia containing off-gas streams.

The aqueous acidic stream comprises sulphuric acid. Consequently, the ammonium rich aqueous stream would comprise ammonium sulphate. Such a stream is useful as a fertiliser product, either as isolated ammonium sulphate solids or in aqueous solution as a liquid fertiliser.

The third off-gas stream comprises H₂S and CO₂. The third off-gas stream is passed to a sulphur recovery unit to separate the sulphur containing compounds such as hydrogen sulphide from the off-gas stream. The sulphur recovery unit is a bio-desulphurisation unit. The sulphur recovery unit may be the same unit which is used to recover sulphur from the syngas stream.

In step (d) of the process according to the invention H₂S is removed from the third off-gas stream by contacting the third off-gas stream in a H₂S-removal zone with an aqueous alkaline stream. The H₂S-removal zone provides a fourth off-gas stream comprising CO₂ and a hydrogen sulphide-comprising aqueous stream.

The process is especially suitable if the load of sulphur compounds in the H₂S-removal zone is below 60000 kg/day, suitably between 50 and 50000 kg/day, preferably between 75 and 20000 kg/day, more preferably between 100 and 10000 kg/day. At these sulphur loads, conventional processes such as the Claus process are difficult, if not impossible, to operate, whereas the process according to the invention can be used advantageously.

Suitably, the total amount of H₂S in the third off-gas stream is between 10 ppmv and 20 vol%, preferably between 20 ppmv and 10 vol%. An advantage of the process according to the invention is that the H₂S in the third off-gas stream can be removed even when the H₂S amount is relatively low, typically between 10 ppmv and 20 vol%.

For other processes such as the Claus process it is necessary that a sour gas is produced that has a high H₂S content to make it suitable as a Claus feed.

Suitable aqueous alkaline streams include aqueous hydroxide solutions, e. g. sodium hydroxide or potassium hydroxide solutions in water. The pH of the aqueous alkaline solvents is suitably between 7 and 12, preferably between 8 and 11.

The main reactions that can take place in the H₂S-removal zone in step (d) are:
(D) H₂S absorption: H₂S + OH → HS⁻ + H₂O)
(E) H₂S absorption: H₂S + CO₃²⁻ → HS⁻ + HCO₃⁻
(F) CO₂ absorption: CO₂ + OH⁻ → HCO₃⁻
(G) Carbonate formation: HCO₃⁻ + OH⁻→ CO₃²⁻+ H₂O
(H) Poly-hydrosulphide: 2HS⁻ + S₈ → 2HS₅⁻

The term sulphide-comprising aqueous stream as used herein refers to an aqueous stream comprising one or more products of the main reactions (D) to (H) that can take place in the H₂S-removal zone, such as HS⁻, disulphides, polysulphides, thiocarbonates and carbonates but can also include dissolved H₂S.

The preferred temperature in the H₂S removal zone is between 5 and 70 °C, more preferably between 10 and 50 °C. Preferably, the pressure in the H₂S removal zone is between 1 and 75 bara, more preferably between 2 and 5 bara.

Typically, the H₂S removal zone is a gas/liquid contactor. Suitable gas/liquid contactors are described in Perry's Chemical Engineers' Handbook, 7th edition, section 14 (1997) and include for example a tray or packed column or a gas scrubber.

Optionally, the medium of the H₂S removal zone can be buffered. Preferred buffering compounds are carbonates, bicarbonates, phosphates and mixtures thereof, especially sodium carbonate and/or sodium bicarbonate. The concentration of the buffering compounds depends inter alia on the composition of the third off-gas flow and is generally adjusted in such a way that the pH of the reaction medium in the H₂S removal zone is between 6.0 and 10, more preferably between 6.5 and 9.0. The flow rate of the aqueous alkaline stream supplied to the H₂S removal zone can be adjusted to achieve the desired pH, and fresh aqueous alkaline added as necessary.

Due to their odorous nature, H₂S, mercaptans, sulphides, disulphides and aromatic mercaptans can be detected at parts per million concentrations. Thus, it is desirable for users of such gas and refinery streams to have total concentration of sulphur compounds, especially H₂S, lowered to a concentration of e. g. less than 30 or 20 ppmv, preferably less than 10 ppmv, based on the total fourth off-gas stream.

The process results in the fourth off-gas stream, which is a "H₂S-lean gas stream" having a total concentration of sulphur compounds, especially H₂S, suitably between 0.01 and 30 ppmv, or below 25 ppmv, suitably between 0.01 and 20 ppmv, or below 15 ppmv, suitably between 0.01 and 10 ppmv, preferably between 0.05 and 3.5 ppmv, more preferably between 0.1 and 1 ppmv, based on the total gas stream.

In step (e) of the process according to the invention the hydrogen sulphide-comprising aqueous stream obtained in step (d) is contacted with sulphide-oxidizing bacteria in the presence of oxygen in a oxidation reactor to obtain a sulphur slurry and regenerated aqueous alkaline.

In an optional step, the hydrogen sulphide-comprising aqueous stream can be passed to a flash vessel where excess gas is vented as a hydrogen sulphide-depleted off-gas stream to provide a sulphide-comprising aqueous stream which can then be passed to the bio-reactor.

The main reaction that can take place in the bio-reactor, which is preferably an aerobic reactor, in optional step (e) is the microbiological formation of sulphur and sulphate:
(I) Sulphur production: HS⁻ + 0.5 O₂ → 1/8 S₈ + OH⁻
(J) Sulphate production: HS⁻ + 2O₂ + OH⁻ → SO₄²⁻+ H₂O

The term "sulphur slurry" as used herein refers to a slurry comprising one or more products of the main reactions, including reactions (I) and (J), that can take place in the oxidation reactor.

The term "regenerated aqueous alkaline" as used herein refers to aqueous alkaline wherein at most 2 w/w% sulphur particles are present, preferably at most 1 w/w%.

The amount of oxygen fed into the oxidation reactor is adjusted such that the oxidation of absorbed sulphide results predominantly in sulphur, as suggested in NL 8801009, disclosing a process for the controlled oxidation of sulphur-containing waste water.

Reference herein to sulphide-oxidizing bacteria is to bacteria which can oxidize sulphide to elemental sulphur. Suitable sulphide-oxidizing bacteria can be selected for instance from the known autotrophic aerobic cultures of the genera Thiobacillus and Thiomicrospira.

Typical pressures in the oxidation reactor in step (e) are between 1 and 2 bara. Suitably, the oxidation reactor has a volume of between 5 and 2500 m³, preferably between 10 and 2000 m³.

Preferably, the reaction medium in the bio-reactor in step (e) is buffered. The buffering compounds are chosen in such a way that the bacteria present in the oxidation reactor tolerate them. Preferred buffering compounds are carbonates, bicarbonates phosphates and mixtures thereof, especially sodium carbonate and/or sodium bicarbonate. The concentration of the buffering compounds depends inter alia on the composition of the gas flow and is generally adjusted in such a way, that the pH of the reaction medium in the oxidation reactor is between 6 and 10, more preferably between 7 and 9.

In optional step (f) of the process according to the invention at least part, typically between 5 and 95 w/w%, preferably between 10 and 90 w/w% based on the total weight of the slurry, of the sulphur slurry obtained in step (e) is separated from the regenerated aqueous alkaline to provide a sulphur slurry stream and an aqueous alkaline stream. The phrase "at least part of" as used herein also includes a complete separation of sulphur from the regenerated aqueous alkaline.

Suitably, the separating step takes place in a solid/liquid separator. Suitable solid/liquid separators are described in Perry's Chemical Engineers' Handbook, 7th edition, section 22 (1997).

Typically, the sulphur content of the separated sulphur slurry stream is between 5 w/w% and 50 w/w%, based on the slurry. Typically, the water of the sulphur slurry is removed to an extent that a sulphur cake with a dry solids content of between 55 and 70% is obtained.

Typically, the sulphur content of the sulphur cake is between 90 and 98 w/w%, based on the total weight of the sulphur cake. Optionally, the sulphur slurry obtained in step (f) can be re-slurried, filtered and dried to obtain a sulphur paste with a purity of at least 95 wt% sulphur, preferably at least 99 wt% sulphur. The sulphur paste thus-obtained can optionally be dried to produce a powder with a dry weight content of at least 85%, preferably at least 90%. This powder can suitably be applied as a fungicide or as a miticide.

The sulphur produced in the process according to the invention has a hydrophilic nature and does not cause the fouling problems that are typically caused by sulphur produced by non-biological liquid processes. Another advantage of the sulphur produced in the process according to the invention is that it is very suitable for use as a fertilizer.

In optional step (g) of the process according to the invention, the regenerated aqueous alkaline obtained in step (e) is recycled to the H₂S-removal zone discussed in step (d). Suitably, between 10 and 99%, preferably between 30 and 95%, more preferably between 40 and 90% of the total amount of regenerated aqueous alkaline obtained in step (e) is recycled to the H₂S-removal zone in step (d) as the aqueous alkaline stream. By recycling the regenerated aqueous alkaline to the H₂S-removal zone fresh aqueous alkaline is supplied to the H₂S-removal zone for the removal of H₂S. This enhances the removal of H₂S to a concentration of 30 ppmv or less, suitably 20 ppmv or less, preferably 10 ppmv or less. The regenerated aqueous alkaline stream optionally comprises sulphur particles.

In step (h) of the method according to the invention, the sulphate component of the sulphur slurry produced in step (e) and isolated in step (f) is used to generate a sulphuric acid stream. The sulphuric acid stream is passed to the ammonia scrubber in step (i) as the aqueous acidic stream. In this way, an integrated process is provided in which the sulphate product of the bio-desulphurisation in step (e) can be used to separate the ammonia from the second off-gas stream in step (c), and provide the ammonium-rich stream.

In optional step (j) of the method according to the invention, a condensed water stream, such as a condensed water stream from a high pressure hydrolysis unit for a raw syngas stream, can be provided. The condensed water stream can comprise H₂O, NH₃, CO₂ and H₂S, and can be passed to a sour water stripper to provide a sour water stripper off-gas stream comprising NH₃, H₂S and CO₂ and a sour water stripper water stream.

In an optional step (k), the sour water stripper off-gas stream can be passed to the second off-gas stream from the low pressure hydrolysis zone, allowing the contents of the sour water stripper off-gas stream to be processed in the ammonia scrubber and any sulphur recovery unit.

Embodiments of the present invention will now be described by way of example only, and with reference to the accompanying non-limiting drawings in which:
Figure 1 shows a first embodiment of a typical process scheme according to the method of the invention.
Figure 2 shows a second embodiment of a typical process scheme according to the method of the invention.

For the purpose of this description, a single reference number will be assigned to a line as well as a stream carried in that line. The same reference numbers refer to similar components, streams or lines.

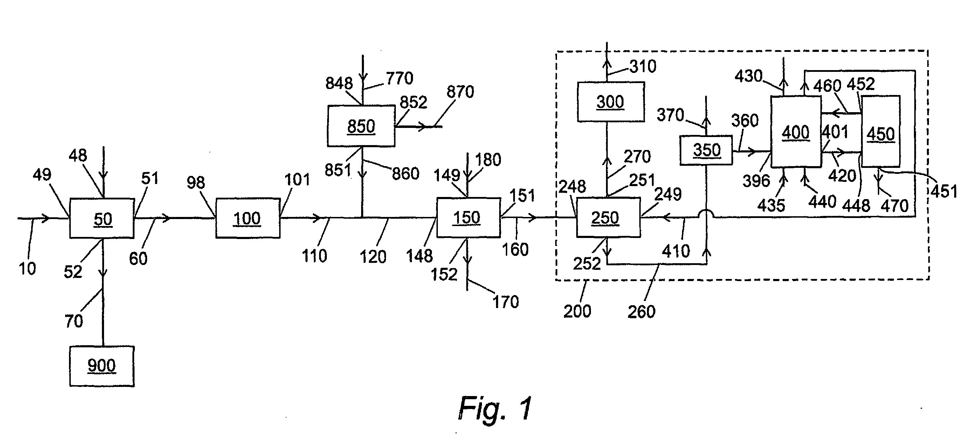

Figure 1 shows a slurry bleed stream 720 comprising particulate solids, HCN, NH₃, H₂S, CO₂ and optionally one or both of COS and CS₂, being passed to the first inlet 48 of a sour slurry stripper 50. The sour slurry stripper 50 can also be supplied with a steam stream 10 at a second inlet 49. The steam can strip the gaseous components from the slurry bleed stream to provide a first off-gas stream 60 comprising HCN, NH₃, H₂S, CO₂ and optionally one or both of COS and CS₂ at the first outlet 51 of the sour slurry stripper 50 and a stripped slurry stream 70 comprising particulate solids at a second outlet 52 of the sour slurry stripper. The first off-gas stream 60 can be substantially free of particulate solids. The stripped slurry stream 70 can be passed to a clarifier 900 to dispose of the slurry.

The first off-gas stream 60 can then be passed to a first inlet 98 of a low pressure hydrolysis zone 100, where it is contacted with a hydrolysis catalyst and hydrolysed, optionally in the presence of added steam or a steam/water mixture, to remove HCN and any COS and CS₂ present in the stream. The low pressure hydrolysis zone 100 provides a second off-gas stream 110 at a first outlet 101. The second off-gas stream 110 comprises NH₃, H₂S and CO₂, and is substantially free of HCN and any COS and CS₂, if the latter two components were present in the first off-gas stream 60.

After treatment in the low pressure hydrolysis zone 100, the second off-gas stream, which is depleted of HCN, COS and/or CS₂, can optionally be combined with a sour water stripper off-gas stream 860, to provide a combined second off-gas stream 120.

The sour water stripper off-gas stream 860 comprises NH₃, H₂S and CO₂, and is provided by a first outlet 851 of a sour water stripper 850. The sour water stripper 850 is fed at a first inlet 848 by a condensed water stream 770, which can be produced by a high pressure hydrolysis unit (not shown) which processes a raw syngas stream. A stripping agent such as steam can be used to separate the gaseous components such as NH₃, H₂S and CO₂ from the condensed water stream to provide the sour water stripper off-gas stream 860 and a sour water stripper water stream 870 at a second outlet 852 of the sour water stripper 850.

The combined second off-gas stream 120 can be passed to the first inlet 148 of an ammonia scrubber 150. Inside the ammonia scrubber 150, the combined second off-gas stream 120 is treated with aqueous acidic stream 180, which enters the scrubber at a second inlet 149. The aqueous acidic stream 180 reacts with the basic ammonia to provide an ammonium-comprising aqueous stream 170 at a second outlet 152 of the scrubber and a third off-gas stream 160 at a first outlet 151. After treatment in the ammonia scrubber 150, the third off-gas stream comprises H₂S and CO₂ and is depleted of, more preferably substantially free of HCN, COS and/or CS₂ and NH₃.

The third off-gas stream 160 can then be passed to a sulphur removal zone 200. For example, the third off-gas stream can be passed to the first inlet 248 of a H₂S-removal zone 250, where it can be contacted with an aqueous alkaline stream 410 provided to a second inlet 249 of the H₂S-removal zone 250. The H₂S is captured in the aqueous alkaline stream to provide a hydrogen sulphide-comprising aqueous stream 260 at a second outlet 252 and a fourth off-gas stream 270 at a first outlet 251 of the H₂S-removal zone 250.

The fourth off-gas stream 270 comprises CO₂ and is preferably a H₂S- depleted gas stream and more preferably substantially free of H₂S. The fourth off-gas stream 270 can be passed to a knockout vessel 300 and then further processed via continuing fourth off-gas stream 310.

The hydrogen sulphide-comprising aqueous stream 260 from the H₂S-removal zone 250 can be optionally passed to a flash vessel 350. H₂S-depleted excess gas is vented off as a hydrogen sulphide-depleted off-gas stream 370 and a sulphide-comprising aqueous stream 360 provided. In the case that the hydrogen sulphide-depleted off-gas stream 370 contains some H₂S, the H₂S is removed in a small flash gas contactor before further use, for instance as fuel gas.

The sulphide-comprising aqueous stream 360 can be passed to the first inlet 396 of a bio-reactor 400, such as an aerobic reactor, where the sulphide compounds are oxidized to provide a sulphur slurry and regenerate the aqueous alkaline used in the H₂S-removal zone 250. Nutrients and air are fed to the bio-reactor via nutrient feed stream 435 and air stream 440.

The sulphur slurry and aqueous alkaline generated in the bio-reactor 400 is a sulphur-containing solid/liquid mixture and can be passed to a solid/liquid separator 450 as sulphur slurry and regenerated aqueous alkaline stream 420. The sulphur-slurry is separated and discharged at first outlet 451 as sulphur slurry stream 470. The remaining liquid exits the solid/liquid separator at second outlet 452 and is passed back to the bio-reactor 400 as aqueous alkaline recycle stream 460. Off-gas is vented from the bio-reactor via bio-reactor off-gas stream 430. The regenerated aqueous alkaline is recycled to a second inlet 252 of the H₂S-removal zone 250 as aqueous alkaline stream 460.

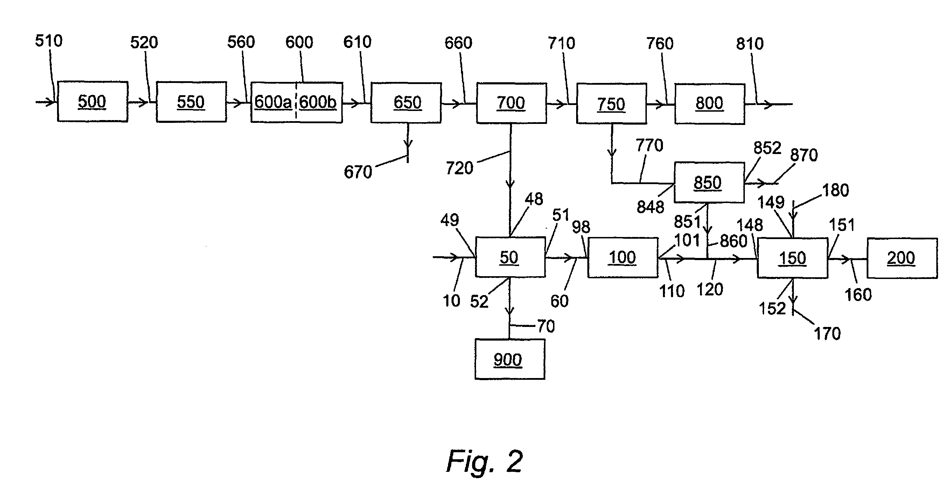

Figure 2 shows a generalised gasification scheme 5, such as a coal gasification scheme, utilising the method of the invention. Those streams, units and zones described in respect of Figure 1 will have identical reference numerals, names and functions in the scheme of Figure 2.

The hydrocarbon feed 560, such as a prepared coal feed, is provided by passing a raw hydrocarbon 510, such as a coal feedstock to a coal milling and drying unit 500, where it is processed, optionally with flux, to provide a milled coal feed 520. The milled coal feed 520 is then passed to a coal feeding unit 550, which provides the hydrocarbon feed 560, such as milled and dried coal to gasifier 600.

Gasifier 600 comprises a gasifying zone 600a and a cooling zone 600b. Inside the gasifying zone 600a the hydrocarbon feed, such as the milled and dried coal, is fed into burners, along with nitrogen, oxygen and steam. Ash, in the form of slag gravitates down the gasifying zone 600a and into a slag quench tank, from which it can be transferred to a receiving bin for disposal. The product synthesis gas rises in the gasifying zone to an upper quench section, where it can be quenched by recycled syngas, for instance from a bleed stream from the raw syngas stream 710 discussed below after appropriate recompression, to provide a hot syngas stream. The hot syngas stream comprises CO, H₂, particulate solids, HCN, NH₃, H₂S, CO₂ and optionally one or both of COS and CS₂ and can then be passed to a cooling zone 600b, such as a syngas cooler or waste heat boiler, where it is further cooled against a water stream, such as a boiling water stream to provide a saturated steam stream and a cooled syngas stream 610.

The cooled syngas stream 610 can then be passed to a dry solids removal unit 650, such as a cyclone separator, where a large fraction of the particulate solids is separated from the gaseous components to provide fly ash 670 and a wet solids syngas stream 660 comprising CO, H₂, particulate solids, H₂O, HCN, NH₃, H₂S, CO₂ and optionally one or both of COS and CS₂.

The wet solids syngas stream 660 can be passed to a wet scrubbing column 700, where it can be scrubbed to provide a slurry bleed stream 720 comprising particulate solids, HCN, NH₃, H₂S, CO₂ and optionally one or both of COS and CS₂ and a raw syngas stream 710 comprising CO, H₂, HCN, NH₃, H₂S, CO₂ and optionally one or both of COS and CS₂.

The slurry bleed stream 720 can be passed to a sour slurry stripper and processed as discussed in relation to Figure 1. The raw syngas stream 710 can then be passed to a high pressure hydrolysis unit 750, where the HCN and any COS and CS₂ is hydrolysed to provide a hydrolysed syngas stream 760 comprising CO, H₂, NH₃, H₂S and CO₂ and a condensed water stream 770 comprising H₂O, NH₃, CO₂ and H₂S. The condensed water stream 770 can be passed to the first inlet 848 of the sour water stripper 850 as discussed in relation to Figure 1.

The hydrolysed syngas stream 760 can be passed to an acid gas removal unit 800, such as those known in the art, to provide a treated syngas stream 810. The treated syngas stream 810 comprises CO and H₂, and more preferably consists essentially of CO and H₂. The treated syngas can then be passed to a Fischer-Tropsch unit for conversion into longer chain hydrocarbons.

The person skilled in the art will understand that the present invention can be carried out in many various ways without departing from the scope of the appended claims.

## Claims

1. A method of treating a first off-gas stream (60) in a gasification process to provide an ammonium-rich stream (170), comprising at least the steps of:
(a) providing a first off-gas stream (60) comprising HCN, NH₃, H₂S, CO₂ and optionally one or both of COS and CS₂ by separating a slurry bleed stream (720) comprising particulate solids, HCN, NH₃, H₂S, CO₂ and optionally one or both of COS and CS₂ in a sour slurry stripper (50) to provide the first off-gas stream (60) and a stripped slurry stream (70) comprising particulate solids;
(b) passing the first off-gas stream (60) to a hydrolysis zone (100) operating at a pressure in the range of 1.5 to 10 bara to hydrolyse the HCN and any COS and CS₂ to provide a second off-gas stream (110) comprising NH₃, H₂S and CO₂;
(c) scrubbing the second off-gas stream (110) with an aqueous acidic stream (180) comprising sulphuric acid in an ammonia scrubber (150) to provide a third off-gas stream (160) comprising H₂S and CO₂ and an ammonium-rich aqueous stream (170) comprising ammonium sulphate;
(d) contacting the third off-gas stream (160) with an aqueous alkaline stream (410) in a H₂S-removal zone (250) to provide a fourth off-gas stream (270) comprising CO₂ and a hydrogen sulphide-comprising aqueous stream(260); and
(e) passing the hydrogen sulphide-comprising aqueous stream (260), optionally via a flash vessel (350), to a bio-reactor (400) comprising sulphide-oxidising bacteria in the presence of oxygen to generate a sulphur slurry and regenerated aqueous alkaline,
wherein in step (e) the sulphur slurry comprises sulphate, and the process further comprising the steps of:
(h) generating a sulphuric acid stream from the sulphate in the sulphur slurry; and
(i) passing the sulphuric acid stream to the ammonia scrubber (150) as the aqueous acidic stream (180).

2. The method according to claim 1 further comprising the steps of:
(f) separating at least part of the sulphur slurry from the sulphur slurry and regenerated aqueous alkaline stream (420) to provide a sulphur slurry stream (470) and an aqueous alkaline stream (460); and
(g) recycling the aqueous alkaline stream (460) to the H₂S-removal zone.

3. The method according to claim 1 or 2 wherein the slurry bleed stream in step (a) is provided by the further steps comprising:
(i) gasifying a hydrocarbon feed (560) in a gasification zone (600a) to provide a hot syngas stream comprising CO, H₂, particulate solids, HCN, NH₃, H₂S, CO₂ and optionally one or both of COS and CS₂;
(ii) cooling the hot syngas stream in a cooling zone (600b) to provide a cooled syngas stream (610);
(iii) separating the cooled syngas stream (610) in a dry solids removal unit (650) to provide fly ash (670) and a wet solids syngas stream (660) comprising CO, H₂, particulate solids, H₂O, HCN, NH₃, H₂S, CO₂ and optionally one or both of COS and CS₂; and
(iv) separating the wet solids syngas stream (660) in a wet scrubbing column (700) to provide the slurry bleed stream (720) and a raw syngas stream (710) comprising CO, H₂, HCN, NH₃, H₂S, CO₂ and optionally one or both of COS and CS₂.

4. The method according to claim 3 further comprising the steps of:
(v) passing the raw syngas stream (710) to a high pressure hydrolysis unit (750) to hydrolyse the HCN and any COS and CS₂ to provide a hydrolysed syngas stream (760) comprising CO, H₂, NH₃, H₂S and CO₂ and a condensed water stream (770) comprising NH₃, CO₂ and H₂S.

5. The method of any of the preceding claims further comprising the steps of:
(j) passing a condensed water stream (770) comprising H₂O, NH₃, CO₂ and H₂S to a sour water stripper (850) to provide a sour water stripper off-gas stream (860) comprising NH₃, H₂S and CO₂ and a sour water stripper water stream (870); and
(k) passing the sour water stripper off-gas stream (860) to the second off-gas stream (110).

## Patentansprüche

1. Verfahren zum Behandeln eines ersten Abgasstroms (60) in einem Vergasungsverfahren zum Erhalten eines ammoniumreichen Stroms (170), umfassend mindestens die Schritte:
(a) Erhalten eines ersten Abgasstroms (60), enthaltend HCN, NH₃, H₂S, CO₂ und gegebenenfalls COS oder/und CS₂, durch Trennen eines Schlammablassstroms (720), enthaltend Feststoffpartikel, HCN, NH₃, H₂S, CO₂ und gegebenenfalls COS oder/und CS₂, in einem Abscheider sauren Schlamms (50), zum Erhalten des ersten Abgasstroms (60) und eines abgeschiedenen Schlammstroms (70), enthaltend Feststoffpartikel;
(b) Leiten des ersten Abgasstroms (60) zu einer Hydrolysezone (100), die mit einem Druck im Bereich von 1,5 bis 10 Bar arbeitet, um das HCN und sämtliches COS und CS₂ zum Erhalten eines zweiten Abgasstroms (110) zu hydrolysieren, enthaltend NH₃, H₂S und CO₂;
(c) Waschen des zweiten Abgasstroms (110) mit einem wässrigen sauren Strom (180), enthaltend Schwefelsäure, in einem Ammoniakwäscher (150), zum Erhalten eines dritten Abgasstroms (160), enthaltend H₂S und CO₂, und eines ammoniumreichen wässrigen Stroms (170), enthaltend Ammoniumsulfat;
(d) In-Kontakt-Bringen des dritten Abgasstroms (160) mit einem wässrigen alkalischen Strom (410) in einer H₂S-Entnahmezone (250) zum Erhalten eines vierten Abgasstroms (270), enthaltend CO₂, und eines Schwefelwasserstoff enthaltenden wässrigen Stroms (260); und
(e) Leiten des Schwefelwasserstoff enthaltenden wässrigen Stroms (260), gegebenenfalls über ein Entspannungsverdampfergefäß (350), zu einem Bioreaktor (400), enthaltend Sulfid oxidierende Bakterien in Anwesenheit von Sauerstoff, zum Erzeugen eines Schwefelschlamms und eines regenerierten wässrigen alkalischen Stroms, wobei der Schwefelschlamm in Schritt (e) Sulfat enthält und das Verfahren ferner die Schritte umfasst:
(h) Erzeugen eines Schwefelsäurestroms aus dem Sulfat im Schwefelschlamm; und
(i) Leiten des Schwefelsäurestroms zum Ammoniakwäscher (150) als wässrigen sauren Strom (180).

2. Verfahren nach Anspruch 1, ferner umfassend die Schritte:
(f) Trennen zumindest eines Teils des Schwefelschlamms vom Schwefelschlamm und dem regenerierten wässrigen alkalischen Strom (420) zum Erhalten eines Schwefelschlammstroms (470) und eines wässrigen alkalischen Stroms (460); und
(g) Rückführen des wässrigen alkalischen Stroms (460) zur H₂S-Entnahmezone.

3. Verfahren nach Anspruch 1 oder 2, wobei der Schlammablassstrom in Schritt (a) durch folgende weitere Schritte erhalten wird:
(i) Vergasen eines Kohlenwasserstoffeinsatzes (560) in einer Vergasungszone (600a) zum Erhalten eines heißen Synthesegasstroms, enthaltend CO, H₂, Feststoffpartikel, HCN, NH₃, H₂S, CO₂ und gegebenenfalls COS oder/und CS₂;
(ii) Kühlen des heißen Synthesegasstroms in einer Kühlzone (600b) zum Erhalten eines gekühlten Synthesegasstroms (610);
(iii) Trennen des gekühlten Synthesegasstroms (610) in einer Trockenfeststoffentnahmeeinheit (650) zum Erhalten von Flugasche (670) und eines nassen Feststoffsynthesegasstroms (660), enthaltend CO, H₂, Feststoffpartikel, H₂O, HCN, NH₃, H₂S, CO₂ und gegebenenfalls COS oder/und CS₂; und
(iv) Trennen des nassen Feststoffsynthesegasstroms (660) in einer Nasswaschkolonne (700) zum Erhalten des Schlammablassstroms (720) und eines Rohsynthesegasstroms (710), enthaltend CO, H₂, HCN, NH₃, H₂S, CO₂ und gegebenenfalls COS oder/und CS₂.

4. Verfahren nach Anspruch 3, ferner umfassend die Schritte:
(v) Leiten des Rohsynthesegasstroms (710) zu einer Hochdruckhydrolyseeinheit (750) zum Hydrolisieren des HCN und sämtlichen COS und CS₂, zum Erhalten eines hydrolysierten Synthesegasstroms (760), enthaltend CO, H₂, NH₃, H₂S und CO₂, und eines Kondenswasserstroms (770), enthaltend NH₃, CO₂ und H₂S.

5. Verfahren nach einem der vorhergehenden Ansprüche, ferner umfassend die Schritte:
(j) Leiten eines Kondenswasserstroms (770), enthaltend H₂O, NH₃, CO₂ und H₂S, zu einem Sauerwasserabscheider (850), zum Erhalten eines Sauerwasserabscheider-Abgasstroms (860), enthaltend NH₃, H₂S und CO₂ und einen Sauerwasserabscheider-Wasserstrom (870); und
(k) Leiten des Sauerwasserabscheider-Abgasstroms (860) zum zweiten Abgasstrom (110).

## Revendications

1. Procédé de traitement d'un premier courant de gaz d'échappement (60) dans un processus de gazéification pour fournir un courant riche en ammonium (170), comprenant au moins les étapes consistant à :
(a) fournir un premier courant de gaz d'échappement (60) contenant les gaz HCN, NH₃, H₂S, CO₂ et, éventuellement, COS et/ou CS₂, en séparant un courant de soutirage de coulis (720) contenant des particules solides, les gaz HCN, NH₃, H₂S, CO₂ et, éventuellement, COS et/ou CS₂, dans un épurateur de coulis acide (50) pour fournir le premier courant de gaz d'échappement (60) et un courant de coulis épuré (70) contenant des particules solides ;
(b) faire passer le premier courant de gaz d'échappement (60) dans une zone d'hydrolyse (100) fonctionnant sous une pression comprise entre 1,5 et 10 bara pour hydrolyser le HCN et le COS et/ou le CS₂, pour fournir un deuxième courant de gaz d'échappement (110) contenant les gaz NH₃, H₂S et CO₂ ;
(c) laver le deuxième courant de gaz d'échappement (110) avec un courant acide aqueux (180) contenant de l'acide sulfurique dans un laveur à l'ammoniac (150) pour fournir un troisième courant de gaz d'échappement (160) contenant les gaz H₂S et CO₂ et un courant aqueux riche en ammonium (170) contenant du sulfate d'ammonium ;
(d) mettre en contact le troisième courant de gaz d'échappement (160) avec un courant alcalin aqueux (410) dans une zone de suppression de H₂S (250) afin de fournir un quatrième courant de gaz d'échappement (270) contenant du CO₂ et un courant aqueux contenant du sulfure d'hydrogène (260) ; et
(e) faire passer le courant aqueux contenant du sulfure d'hydrogène (260), éventuellement via un ballon de flashing (350), dans un bioréacteur (400) contenant des bactéries oxydant les sulfures en présence d'oxygène afin de générer un coulis à base de soufre et un courant alcalin aqueux régénéré,
dans lequel, dans l'étape (e), le coulis à base de soufre contient du sulfate, et le processus comprend en outre les étapes consistant à :
(h) générer un courant d'acide sulfurique à partir du sulfate présent dans le coulis à base de soufre ; et
(i) faire passer le courant d'acide sulfurique dans le laveur à l'ammoniac (150) en tant que courant acide aqueux (180).

2. Procédé selon la revendication 1, comprenant en outre les étapes consistant à :
(f) séparer au moins une partie du coulis à base de soufre du coulis à base de soufre et du courant alcalin aqueux régénéré (420) pour fournir un courant de coulis à base de soufre (470) et un courant alcalin aqueux (460) ; et
(g) récupérer le courant alcalin aqueux (460) dans la zone de suppression du H₂S.

3. Procédé selon la revendication 1 ou 2, dans lequel le courant de soutirage de coulis de l'étape (a) est fourni par les étapes ultérieures consistant à :
(i) gazéifier une alimentation d'hydrocarbures (560) dans une zone de gazéification (600a) pour fournir un courant de gaz de synthèse chaud contenant les gaz CO et H_{2,} des particules solides, les gaz HCN, NH₃, H₂S, CO₂ et, éventuellement COS et/ou CS₂ ;
(ii) refroidir courant de gaz de synthèse dans une zone de refroidissement (600b) pour fournir un courant de gaz de synthèse refroidi (610) ;
(iii) séparer le courant de gaz de synthèse refroidi (610) dans une unité de suppression des solides secs (650) afin de fournir des cendres volantes (670) et un courant de gaz de synthèse à base de solides mouillés (660) contenant les gaz CO et H₂, des particules solides, les gaz H₂O, HCN, NH₃, H₂S, CO₂ et éventuellement COS et/ou CS₂ ; et
(iv) séparer le courant de gaz de synthèse à base de solides mouillés (660) dans une colonne de lavage mouillée (700) pour fournir le courant de soutirage de coulis (720) et un courant de gaz de synthèse brut (710) contenant les gaz CO, H₂, HCN, NH₃, H₂S, CO₂ et éventuellement COS et/ou CS₂.

4. Procédé selon la revendication 3 comprenant en outre les étapes consistant à :
(v) faire passer le courant de gaz de synthèse brut (710) dans une unité d'hydrolyse sous haute pression (750) afin d'hydrolyser les gaz HCN et COS et/ou CS₂ pour fournir un courant de gaz de synthèse hydrolysé (760) contenant les gaz CO, H_{2,} NH₃, H₂S, CO₂ et un courant d'eau condensée (770) contenant les gaz NH₃, CO₂ et H₂S.

5. Procédé selon l'une quelconque des revendications qui précèdent, comprenant en outre les étapes consistant à :
(j) faire passer un courant d'eau condensée (770) contenant les gaz H₂O, NH₃, CO₂ et H₂S dans un épurateur d'eau acide (850) afin de fournir un courant de gaz d'échappement d'épurateur d'eau acide (860) contenant les gaz NH₃, H₂S et CO₂ et un courant d'eau d'épurateur d'eau acide (870) ; et
(k) faire passer le courant de gaz d'échappement d'épurateur d'eau acide (860) dans le deuxième courant de gaz d'échappement (110).
